# EUROPÄISCHE PATENTANMELDUNG

(11) **EP 1 157 884 A1**
(43) Veröffentlichungstag der Anmeldung: **28.11.2001**
(21) Anmeldenummer: 01108469.6
(22) Anmeldetag: 04.04.2001
(51) Int. Cl.: B60N 2/56, B60H 1/00

(54) **Verfahren und Vorrichtung zur Einstellung der Heizleistung einer elektrischen Sitzheizung in Kraftfahrzeugen**

(30) Priorität: 29.04.2000 DE 10021134
(71) Anmelder: Bayerische Motoren Werke Aktiengesellschaft, 80809 München (DE)
(72) Erfinder: Salzberger, Robert, 81927 München (DE)

(57) **Zusammenfassung**

Bei einem Verfahren und einer Vorrichtung zur Einstellung der Heizleistung einer elektrischen Sitzheizung in Kraftfahrzeugen wird die Heizleistung der Sitzheizung automatisch abhängig von der Stellgröße einer Heiz- bzw. Klimaanlage zur Temperierung des Fahrgstraumes eingestellt. Vorzugsweise wird die Heizleistung auch abhängig von einer manuellen Vorauswahl eingestellt.

## Beschreibung

Die Erfindung bezieht sich auf ein Verfahren und eine Vorrichtung zur Einstellung der Heizleistung einer elektrischen Sitzheizung in Kraftfahrzeugen.

Ein derartiges Verfahren und eine derartige Vorrichtung sind beispielsweise aus der DE 43 18 432 A1 bekannt.

Weiterhin ist eine Vielzahl von Verfahren und Vorrichtungen zur Steuerung und Regelung von Heiz- und Klimaanlagen zur Temperierung des Fahrgastraumes bekannt.

Bisher werden die Systeme Sitzheizung und Heiz-/Klimaanlage im Wesentlichen getrennt voneinander in Fahrzeugen vorgesehen.

Bei bekannten Sitzheizungssystemen werden meist zwei bis drei Leistungsstufen über einen Taster oder einen Schalter vorgesehen. Dabei wird die Heizleistung beispielsweise auf 100%, 50% und/oder 30% bzw. auf 2 oder 3 fest definierte Temperaturwerte eingestellt und ggf. geregelt. Auch sind Sitzheizungssysteme bekannt, wie bei der DE 43 18 432 A1, die über ein eigenes unabhängig agierendes Steuergerät verfügen und die auf vorgegebene Soll-Temperaturen stufenlos regelbar sind.

Es ist Aufgabe der Erfindung Sitzheizungssysteme eingangs genannter Art zu vereinfachen, aber den Komfort zu erhöhen.

Diese Aufgabe wird durch die Merkmale der Patentansprüche gelöst.

Der Grundgedanke der Erfindung liegt in der Integration der Steuerung bzw. Regelung der elektrischen Heizleistung für eine Sitzheizung in ein ohnehin für ein Fahrzeug vorgesehenes Steuergerät für Heiz- und/oder Klimaanlagen zur Temperierung des Fahrgastraumes. Dabei soll die Heizleistung der Sitzheizung automatisch abhängig von der Stellgröße der Heiz- bzw. Klimaanlage eingestellt werden. Die Stellgröße entspricht der Abweichung der Ist-Innenraumtemperatur von der durch den Fahrer eingestellten Soll-Innenraumtemperatur.

Eine Integration der Sitzheizungsansteuerung in die Heiz- und/oder Klimaanlagenbedieneinheit bietet den Vorteil, die Sitzheizung nach dem tatsächlichen Heizbedarf der Fahrgastkabine individuell einstellbar zu betreiben, ohne für die Sitzheizung eine eigene Sollwertvorgabe vorzusehen. Es wird lediglich ein Ein-/Ausschalter für die Sitzheizung benötigt. Hierdurch werden die Kosten eingespart, die anderenfalls für eine zusätzliche Steuer- oder Regeleinheit anfallen würden.

Vorzugsweise wird die Heizleistung auch abhängig von einer manuellen Vorauswahl, z. B. in Form von durch den Fahrer wählbaren Heizleistungs-Stufen, eingestellt. Diese Erweiterung erhöht die Individualität und den Komfort bei Beibehaltung einer einfachen Bedienstruktur.

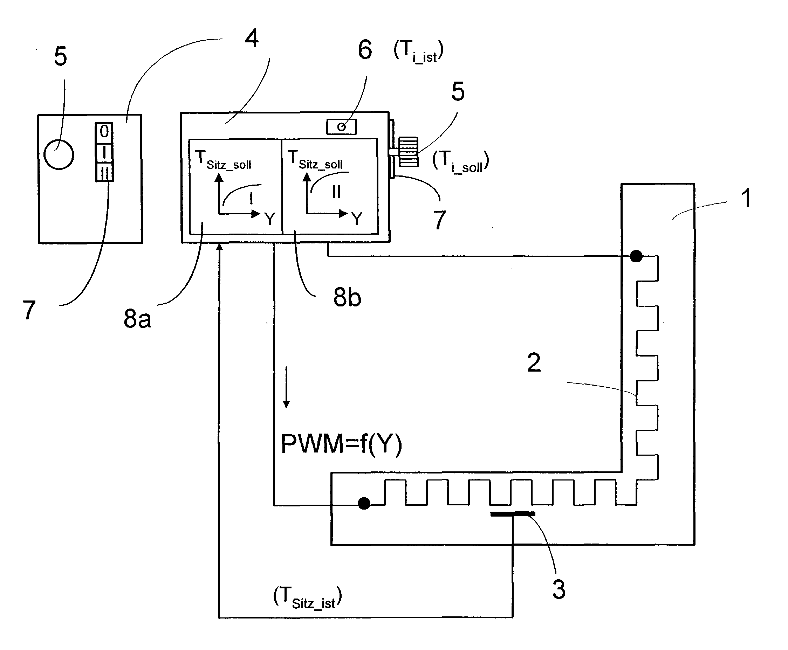

In der Zeichnung ist ein Ausführungsbeispiel der Erfindung dargestellt. Sie zeigt eine erfindungsgemäß erweiterte Bedieneinheit einer Heiz- und/oder Klimaanlage zur Regelung der Innenraumtemperatur eines Fahrgastraumes im Zusammenhang mit einer elektrischen Sitzheizung.

In der Zeichnung ist ein Sitz 1 mit einer elektrischen Heizleitung 2 dargestellt. In der Nähe der Heizleitung 2 ist im Sitz 1 ein Temperatursensor 3 zur Messung der Ist-Sitztemperatur T_{Sitz_ist} angebracht. Die Bedieneinheit 4, die das Steuergerät einer Heiz- und Klimaanlage enthält, weist einen Drehschalter 5 zur Einstellung einer gewünschten Soll-Innenraumtemperatur T_{i_soll} auf. Weiterhin erhält das Steuergerät der Bedieneinheit 4 das Signal eines Innenraumtemperatursensors 6 zur Erfassung der Ist-Innenraumtemperatur T_{i_ist}. Die Stellgröße Y ist die Differenz zwischen der gemessenen Ist-Innenraumtemperatur T_{i_ist} und der durch den Fahrer über den Drehschalter 5 eingestellten Soll-Innenraumtemperatur T_{i_soll}.

Weiterhin weist die Bedieneinheit 4 einen der Sitzheizung zugeordneten Schalter 7 auf. Dieser Schalter 7 kann lediglich ein Ein-/Ausschalter sein. Im dargestellten Beispiel ist er jedoch ein erweiterter Vorauswahlschalter mit den Stufen 0, I und II. Die Stufe 0 entspricht der AUS-Stellung. Die Stufe I entspricht einer niedrigen Heizstufe und die Stufe II entspricht einer hohen Heizstufe. Selbstverständlich könnten auch mehr als zwei Vorwahlstufen bis hin zu einer kontinuierlichen Vorwahl vorgesehen werden.

Die Heizleistung der Sitzheizung wird beispielsweise durch ein pulsweiten-moduliertes Stromversorgungsignal PWM, das Funktion der Stellgröße Y ist, gesteuert oder geregelt. Würde der Schalter 7 nur eine einzige Heizstufe (=EIN-Stellung) aufweisen, würde die Heizleistung der Sitzheizung ausschließlich abhängig von der Stellgröße Y eingestellt werden. Hierbei kann beispielsweise eine Tabelle im Steuergerät der Bedieneinheit 4 vorgesehen sein, die unterschiedlichen Y-Werten entsprechende Soll-Sitztemperaturen T_{Sitz_soll} zuordnet. Die entsprechende Soll-Sitztemperatur T_{Sitz_soll} kann gesteuert oder geregelt eingestellt werden. Im dargestellten Ausführungsbeispiel kann durch den Temperatursensor 3 zur Messung der Ist-Sitztemperatur T_{Sitz_ist} eine geregelte Einstellung der Heizleistung vorgenommen werden.

Zusätzlich kann bei Vorliegen eines Schalters 7 in Form des Vorauswahlschalters mit den Stufen 0, I und II in Stufe I eine grundsätzlich niedrigere Heizleistung als in Stufe II vorausgewählt werden. Eine Überlagerung dieser Vorauswahl mit der Einstellung der Heizleistung abhängig von der Stellgröße Y findet im dargestellten Ausführungsbeispiel mittels der beiden im Steuergerät der Bedieneinheit 4 abgespeicherten Kennlinien 8a und 8b statt. In den Kennlinien 8a und 8b wird jeweils ein Verlauf der Soll-Sitztemperatur T_{Sitz_ist} abhängig von der Stellgröße Y vorgegeben. Das Temperaturniveau der Kennlinie 8b bei Vorauswahl der Stufe II ist dabei, z. B. entsprechend einem Offset, größer als das Temperaturniveau der Kennlinie 8a für dieselben Y-Werte bei Vorauswahl der Stufe I.

Das Ausführungsbeispiel zeigt, daß durch die Erfindung eine leicht bedienbare, aber komfortable Sitzheizungsansteuerung geschaffen wird. Durch die Integration der Sitzheizungsfunktionalität in Form von Software-Komponenten in das Steuergerät der Heiz- und/oder Klimaanlage entstehen keine Zusatzkosten.

## Patentansprüche

1. Verfahren zur Einstellung der Heizleistung einer elektrischen Sitzheizung in Kraftfahrzeugen, **dadurch gekennzeichnet, daß** die Heizleistung der Sitzheizung automatisch abhängig von der Stellgröße (Y) einer Heiz- bzw. Klimaanlage (4) zur Temperierung des Fahrgstraumes eingestellt wird.

2. Verfahren nach Patentanspruch 1, **dadurch gekennzeichnet, daß** die Heizleistung auch abhängig von einer manuellen Vorauswahl (I, II) eingestellt wird.

3. Vorrichtung zur Einstellung der Heizleistung einer elektrischen Sitzheizung in Kraftfahrzeugen, **dadurch gekennzeichnet, daß** Mittel vorgesehen sind, durch die die Heizleistung der Sitzheizung automatisch abhängig von der Stellgröße (Y) einer Heiz- bzw. Klimaanlage (4) zur Temperierung des Fahrgstraumes eingestellt wird.

4. Vorrichtung nach Patentanspruch 3, **dadurch gekennzeichnet, daß** Mittel (7, 8) vorgesehen sind, durch die die Heizleistung auch abhängig von einer manuellen Vorauswahl (I, II) eingestellt wird.
